(19) Europäisches Patentamt

European Patent Office

Office européen des brevets

(11) Veröffentlichungsnummer: **0 189 127**
**B1**

(12) **EUROPÄISCHE PATENTSCHRIFT**

(45) Veröffentlichungstag der Patentschrift:
04.04.90

(21) Anmeldenummer: 86100532.0

(22) Anmeldetag: 17.01.86

(51) Int. Cl.⁴: **B28B 1/52, B28B 7/00,**
**B28B 3/00, C04B 40/02**

(54) Verfahren zum raschen Binden von Zement bei Fasermaterialien enthaltenden und mit Zement geklebten Platten und Profilen.

(30) Priorität: 23.01.85 HU 26085

(43) Veröffentlichungstag der Anmeldung:
30.07.86 Patentblatt 86/31

(45) Bekanntmachung des Hinweises auf die Patenterteilung:
04.04.90 Patentblatt 90/14

(84) Benannte Vertragsstaaten:
AT BE CH DE FR GB IT LI LU NL SE

(56) Entgegenhaltungen:
CH-A- 584 666
DE-C- 880 482
FR-A- 981 384
FR-A- 2 413 513
GB-A- 1 460 284
US-A- 3 468 993
US-A- 4 093 690

(73) Patentinhaber: Nyugatmagyarorszagi Fagazdasagi
Kombinat, Zanati u. 26, H-9700 Szombathely(HU)

(72) Erfinder: Schmidt, Ernö, Dr. Dipl.-Ing., Kárpáti K. u. 21,
H-9700 Szombathely(HU)

(74) Vertreter: Brommer, Hans Joachim, Dr.-Ing. et al,
Patentanwälte Dipl.-Ing. R. Lemcke Dr.-Ing. H.J.
Brommer Bismarckstrasse 16 Postfach 4026,
D-7500 Karlsruhe 1(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zum raschen Abbinden von Zement bei Fasermaterialien enthaltenden und mit Zement gebundenen Platten und Profilen.

Bekanntlich wird in der Beton- und Keramikindustrie das sog. Karbonisierverfahren zum raschen Abbinden von Zement verwendet.

Das Wesen dieses Verfahrens liegt darin, daß sich die im Zementmörtel, bzw. im mit Wasser vermischten Zement in großem Anteil anwesende Verbindung Ca/OH/2 durch Einwirkung des Gases $CO_2$ in Kalkstein umwandelt. Dieser Vorgang - die Karbonisierung - verläuft ziemlich schnell, und die Bindung der gebildeten Kalksteinmoleküle aneinander ist so stark, daß die Festigkeit des Betons in 5 bis 30 Minuten 35 bis 50% seiner 28-tägigen Festigkeit trotz der Tatsache erreichen kann, daß der Hydratationsvorgang eventuell noch nicht begonnen hat.

Das Karbonisierungsverfahren und dessen Verwendungsart sind in US-A 109 669, US-A 3 462 993, US-A 4 362 679 & FR-A 2 413 513, US-A 4 093 690, SE-A 110 792, GB-A 1 460 284 und CH-A 584 666 beschrieben.

Den oben erwähnten Patentschriften können drei wesentliche Lehren entnommen werden, in deren Sinne
- das zu karbonisierende zementhaltige Material im allgemeinen in einem verschließbaren Raum angeordnet werden soll
- im verschließbaren Raum durch Einführung von $CO_2$- Gas ein Überdruck-Luftzustand zustandegebracht werden soll, wobei das $CO_2$-Gas in die Poren des zementhaltigen Materials eindringt, und
- im verschließbaren Raum zunächst ein Unterdruck durch Absaugen der Luft zustandegebracht und dann $CO_2$-Gas eingeführt werden soll, wobei das $CO_2$-Gas leicht in die Poren des zementhaltigen Materials eindringen kann.

Die bekannten - und heute verwendeten - technischen Lösungen zur Durchführung des Karbonisierungsverfahrens verfügen aber über den nicht vernachlässigbaren Nachteil, daß zur Behandlung des zementhaltigen Fasermaterials in jedem Fall ein geschlossener Raum zur Verfügung stehen muß, dessen Ausbildung kostspielig ist.

Ein weiteres Problem ist der entsprechende luftdichte Verschluß dieses Raumes, was bekanntlich Schwierigkeiten verursacht.

Zielsetzung der vorliegenden Erfindung ist, ein Verfahren zum raschen Binden von Zement bei Fasermaterialien enthalten und mit Zement gebundenen Platten und Profilen zu entwickeln, durch das die anfangs beschriebenen Nachteile beseitigt und durch dessen Verwendung mit einfacher Technologie, die Eigenschaften des zu behandelnden Materials selbst ausgenutzt werden, um die Karbonisierung durchzuführen.

Es wurde festgestellt, daß zementhaltige Fasermaterialkompositionen über derart vorteilhafte Eigenschaften verfügen, welche zum Zustandebringen des zur Verwirklichung der Karbonisierung nötigen geschlossenen Raumes vorteilhaft ausgenützt werden können.

Dabei ist in erster Linie darauf hinzuweisen, daß das Fasermaterial - jedwelchen Ursprungs es sei - flexibel ist.

Als weitere vorteilhafte Eigenschaft kommt hinzu, daß unter den Fasermaterialien die zementhaltigen Fasermaterialien mit kleinem Wassergehalt von 30 bis 60 % ein lockeres Volumen haben, daher zusammengedrückt werden können und zu ihrem Zusammenpressen nur kleine Kräfte benötigen. Das lockere Volumen ist im allgemeinen um 2 bis 3-mal größer als das endgültige Volumen des herzustellenden Produktes.

Das zusammengepreßte zementhaltige Fasermaterial mit kleinem Wassergehalt springt mehr oder weniger zurück - sein Volumen erhöht sich also -, wenn die Preßkraft vor Beginn des Bindevorgangs des Zementes eingestellt wird.

Aufgrund dieser Eigenschaften läßt sich die Aufgabe der vorliegenden Erfindung durch die Merkmale des Patentanspruches 1 lösen.

Das Wesen der Erfindung beruht auf der Erkenntnis, daß der Verschluß an den Seiten des Fasermaterials und damit das Zustandebringen des geschlossenen Raumes im Inneren des Fasermaterials auf einfache Weise, die anfangs erwähnten vorteilhaften Eigenschaften der zementhaltigen Fasermaterialien ausnützend, mit dem Fasermaterial selbst erzeugt werden kann.

Dazu wird entweder an den Rändern des herzustellenden Produktes das zementhaltige Fasermaterial flanschartig an allen vier Seiten stärker als seine Solldicke mit Hilfe eines an der Druckplatte der Presse anmontierten Flansches zusammengepreßt.

Oder an den Rändern, flanschartig an allen vier Seiten des herzustellenden Produktes wird mehr Fasermaterial dosiert, so daß nach dem Zusammenpressen auf die Solldicke ebenfalls am Rand eine größere Materialdichte entsteht.

In beiden Fällen entsteht flanschartig an den Rändern des zementhaltigen Fasermaterials größerer Materialdichte, dessen Gasdurchlässigkeit kleiner ist, als die des Fasermaterials innerhalb des Flansches. Mit richtiger Wahl der Materialdichte kann diejenige Gasdichte erreicht werden, die zur Verwirklichung der Karbonisierung nötig ist.

Das erfindungsgemäße Verfahren wird nachstehend anhand vorteilhafter Ausführungsvarianten mit Hilfe der beiliegenden Zeichnung näher dargestellt. Es zeigt

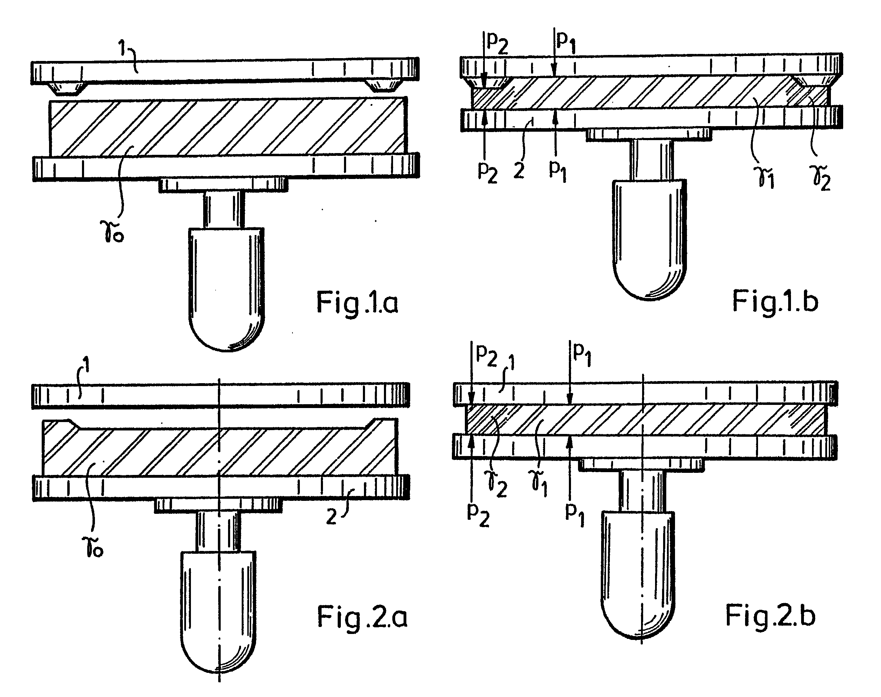

Fig. 1a eine Presse in offenem Zustand, den an der Druckplatte der Presse anmontierten Flansch und die der Materialdichte,

Fig. 1b die gleiche Presse in geschlossenem Zustand, den an der Druckplatte der Presse anmontierten Flansch und die Druck- und Dichte-Angaben,

Fig. 2a ein flanschartig am Rand mit mehr Fasermaterial dosiertes Halbprodukt in offenem Zustand der Presse,

Fig. 2b das gleiche Fasermaterial wie in Fig. 2a im geschlossenen Zustand der Presse,

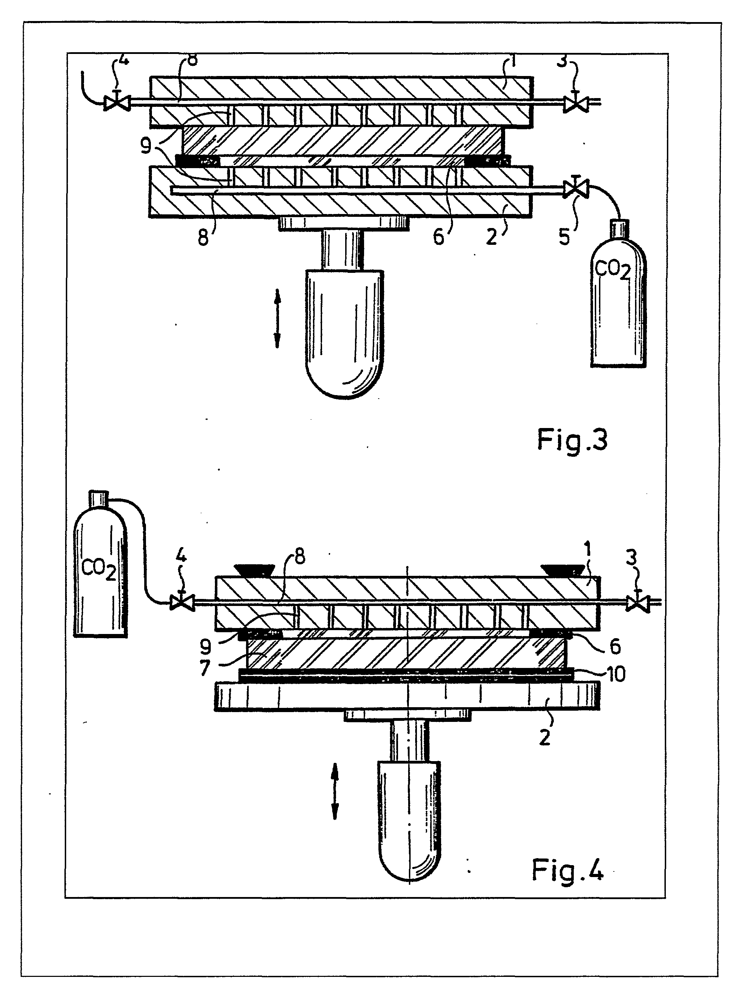

Fig. 3 die Presse für das Beispiel Nr. 1 mit Zubehör,

Fig. 4 die Presse für das Beispiel Nr. 2 mit Zubehör.

Beispiel Nr. 1

Zwei Druckplatten 1, 2 sind Bauteile einer hydraulischen Presse. Die Druckplatte 2 wird durch den hydraulischen Zylinder der Presse nach oben und unten bewegt. Im Inneren der erwähnten Druckplatten sind in Längs- und Querrichtung Bohrungen 8 vorgesehen, an welche senkrecht zur Oberfläche der Druckplatte 1, 2 weitere Bohrungen 9 angeschlossen sind. An zwei Anschlüssen der Bohrungen 8 der Druckplatte 1 sind Ventile 3 und 4 angeordnet. Die Bohrungen 8 der Druckplatte 2 sind an ein weiteres Ventil 5 angeschlossen.

Das nasse, zementhaltige Fasermaterial 7 ist mit Hilfe dieser Platte 6 zwischen die Druckplatten der Presse gelegt. Die Platte 6 ist an ihren vier Seiten in einem Randstreifen von einigen cm nicht perforiert, der übrige Teil der Platte 6 ist siebartig gelocht. Der erwähnte unperforierte Streifen dient an beiden Seiten einer Verdichtung zwischen der perforierten Platte und der Presseplatte und ist hinsichtlich seines Materials dementsprechend gewählt.

Das zu pressende zementhaltige Fasermaterial wird auf die Platte 6 gestreut. Wir zuvor beschrieben am Flansch des Fasermaterials, also an den vier Seiten, mehr Fasermaterial dosiert.

Durch Betätigung der Presse wird das lockere Fasermaterial verdichtet. Während des Zusammenpressens entweicht die Luft aus den Poren des Fasermaterials durch das Ventil 3. Das zementhaltige Fasermaterial verspannt sich gegen den Preßdruck mit einer der Zurückfederungskraft entsprechenden Kraft. Dadurch entsteht ein gasdichter Zustand an der Oberfläche der Druckplatte. Wenn das Fasermaterial durch die Presse auf das erwünschte Herstellungsvolumen zusammengedrückt ist, werden die Ventile 3 verschlossen. In diesem Zustand sind die zwei Planseiten des Fasermaterials durch die Druckplatten der Presse abgedichtet, und die Umfangsseiten des Fasermaterials werden - aufgrund der größeren Materialdichte - gasdicht. Nun wird mit Öffnen des Ventils 5 CO$_2$-Gas durch die Platte 6 in das zementhaltige Fasermaterial 7 geführt. Die in den Poren des Fasermaterials übrig gebliebene Luft wird durch das Überdruckgas in die Bohrungen der Druckplatte 1 gedrückt, und dadurch sind die Bedingungen der Karbonisierung zustandegekommen. Nach Verlauf des Karbonisierungsvorganges kann mit Einführung von Wasserdampf durch das Ventil 4 eventuell Wasser in das zementhaltige Fasermaterial zwecks Beendigung der Hydratation geführt werden.

Beispiel Nr. 2

Zwei Druckplatten 1, 2 sind wieder Bauteile einer hydraulischen Presse. Die Druckplatte 2 wird durch den hydraulischen Zylinder der Presse nach unten und oben bewegt, die Druckplatte 1 ist starr befestigt. Im Inneren der Druckplatte 1 sind in Längs- und Querrichtung Bohrungen 8 vorgesehen, an welche senkrecht zur Oberfläche der Druckplatte 1 weitere Bohrungen 9 angeschlossen sind. An zwei Anschlüssen der Bohrungen 8 im Inneren der Druckplatte 1 sind Ventile 3, 4 angeordnet. In der Druckplatte 2 sind keine Bohrungen vorhanden.

Die Platte 6 ist an ihren vier Seiten in einem Randstreifen von 3 bis 4 cm nicht perforiert, der übrige Teil der Platte 6 ist wieder siebartig gelocht. Der erwähnte nicht perforierte Streifen dient zur Verdichtung und ist dementsprechend gewählt.

Das zu pressende nasse, zementhaltige Fasermaterial 7 wird auf die Platte 10 gestreut. An vier Seiten der Platte 10 - unterhalb der nicht perforierten Fläche der Platte 6 - wird um ca. 10 bis 15% mehr Material dosiert.

Durch Betätigung der hydraulischen Presse wird das Fasermaterial verdichtet. Während des Zusammenpressens entweicht die Luft aus den Poren des Fasermaterials.

Das erwähnte 10 bis 15%ige Mehrmaterial ist ein Fasermaterial größeren Raumgewichtes, und aufgrund des größeren Raumgewichtes entsteht ein, im weiteren Verfahrensablauf ein als Randabdichtung dienender Flansch. Die während des Schließens der Presse ausgedrückte Luft entweicht über den perforierten Teil der Platte 6, durch die Bohrungen 9 der Druckplatte 1 und schließlich durch das offene Ventil 3.

Das Fasermaterial wird auf ein kleineres Volumen als das endgültige Herstellungsvolumen zusammengepreßt. Dabei sind im Fasermaterial zwischen den Druckplatten der Presse weniger Poren als bei dem Zustand in endgültigem Volumen; die Druckplatten der Presse halten dem Relaxationsdruck des Fasermaterials das Gleichgewicht.

Nun wird das Ventil 4 geöffnet, und CO$_2$-Gas wird in die Bohrungen 8, 9 der Druckplatte 1 geführt. Die in den erwähnten Bohrungen gebliebene Luft wird durch das CO$_2$-Gas über das Ventil 3 ausgedrückt. Nach Beendigung der Durchspülung mit CO$_2$-Gas wird das Ventil 3 verschlossen, dann wird der hydraulische Druck im Preßkolben so vermindert, daß sich die Druckplatten öffnen können. Dadurch wird das Zurückspringen des Fasermaterials in seine endgültigen Herstellungsmaße ermöglicht. Infolge der Relaxation bildet sich im Inneren des Fasermaterials Unterdruck, so daß das CO$_2$-Gas leicht eindringt. Das Einströmen des CO$_2$-Gases kann dadurch gesteigert werden, daß CO$_2$-Gas größeren Drucks, eventuell mit 15 bis 20 atm Druck dosiert wird.

Mit beiden Methoden der Karbonisierung verläuft die Karbonisierung bei einer 10 mm dicken Platte in 3,5 bis 4 Minuten, und die Bindung des zementhaltigen Fasermaterials erreicht 45 bis 50 % der 28-tägigen Festigkeit. Das während des chemischen Vorganges verbrauchte CO$_2$-Gas beträgt 8 bis 10 % des dem Fasermaterial zugemischten Zementgewichtes.

**Patentansprüche**

1. Verfahren zum Aushärten von zementgebundenen Platten und Profilen aus Fasermaterial, wobei das Fasermaterial mit Wasser und Zement in bekannter Zusammensetzung mit CO$_2$-Gas karboni-

siert wird, dadurch gekennzeichnet, daß das Fasermaterial (7) mit seinen Begleitstoffen zwischen Druckplatten (1, 2) einer Preßmaschine eingelegt und gepreßt wird, wobei mit dem Pressen der Rand des Fasermaterials eine größere Materialdichte als der übrige Bereich erhält und daß das Fasermaterial zwischen den quasi gasdichten Randflächen durch das CO₂-Gas beaufschlagt und dann der Preßdruck vermindert wird.

2. Verfahren nach Anspruch 1, dadurch gekennzeichnet, daß die größere Materialdichte im Randbereich durch lokale Erhöhung der Preßkraft hergestellt wird.

3. Verfahren nach Anspruch 1, dadurch gekennzeichnet, daß die größere Materialdichte im Randbereich durch größere Dosierung des Fasermaterials (7) in diesem Bereich hergestellt wird.

4. Verfahren nach einem der Ansprüche 1 bis 3, dadurch gekennzeichnet, daß das CO₂-Gas durch Überdruck in der Umgebung der einen Randfläche Luft aus den Poren des Fasermaterials (7) in einen geschlossenen Raum oberhalb der Randfläche verdrängt.

5. Verfahren nach einem der Ansprüche 1 bis 4, dadurch gekennzeichnet, daß das Fasermaterial (7) infolge Verminderung des Preßdruckes zurückfe-dert und dadurch CO₂-Gas in die Poren des Fasermaterials nachgesaugt wird.

## Claims

1. Method for hardening cement-bonded panels and sections of fibre material, where the fibre material with water and cement in known composition is carbonised with CO₂ gas,
characterised in that the fibre material (7) with its accompanying substances is laid between pressure plates (1, 2) of a pressing machine and pressed, and with the pressing the edge of the fibre material receives a greater material density than does the remaining zone, and in that the fibre material is subjected to the action of the CO₂ gas between the al-most gas-tight marginal surfaces and then the pressure is reduced.

2. Method according to Claim 1,
characterised in that the greater material density in the marginal region is produced by local increase of the pressing force.

3. Method according to Claim 1,
characterised in that the greater material density in the marginal region is produced by greater quantity regulation of the fibre material (7) in this region.

4. Method according to one of Claims 1 to 3,
characterised in that the CO₂ gas, by excess pres-sure in the vicinity of the one marginal surface, forces air out of the pores of the fibre material (7) into a closed chamber above the marginal surface.

5. Method according to one of Claims 1 to 4,
characterised in that the fibre material (7) springs back as a result of reduction of the pressure and thus CO₂ gas is sucked into the pores of the fibre material.

## Revendications

1. Procédé de durcissement de plaques et de profilés en matériau fibreux assemblé par du ciment, le matériau fibreux combiné à de l'eau et du ciment de façon connue étant carbonaté au CO₂ gazeux, ca-ractérisé en ce que le matériau fibreux (7) et ses produits d'accompagnement est disposé et pressé entre des plateaux de pression (1, 2) d'une presse, le bord du matériau fibreux conservant, au cours du pressage, une plus grande densité de matière que la zone restante et en ce que le matériau fibreux disposé entre les surfaces de bordure quasi-étanches au gaz est traversé par le CO₂ gazeux, la pression de pressage étant ensuite réduite.

2. Procédé selon la revendication 1, caractérisé en ce que l'on obtient la densité de matière plus importante dans la zone de bordure par augmentation locale de la force de pressage.

3. Procédé selon la revendication 1, caractérisé en ce que l'on obtient la densité de matière plus élevée dans la zone de bordure par un dosage renforcé du matériau fibreux (7) dans cette zone.

4. Procédé selon l'une des revendications 1 à 3, caractérisé en ce que le CO₂ gazeux refoule, par surpression dans la zone de surface de bordure, l'air hors des pores du matériau poreux (7) dans un espace fermé situé au-dessus de la surface de bordure.

5. Procédé selon l'une des revendications 1 à 4, caractérisé en ce que le matériau fibreux (7) effectue un retour élastique par suite de la diminution de la pression de pressage, ce qui réaspire le CO₂ ga-zeux dans les pores du matériau fibreux.

Fig.1.a

Fig.1.b

Fig.2.a

Fig.2.b

EP 0 189 127 B1

EP 0 189 127 B1

Fig.3

Fig.4